# EUROPÄISCHE PATENTSCHRIFT

(11) **EP 0 510 145 B1**
(45) Veröffentlichungstag und Bekanntmachung des Hinweises auf die Patenterteilung: **22.06.1994**
(21) Anmeldenummer: 91918984.5
(22) Anmeldetag: 13.11.1991
(51) Int. Cl.: A23L 1/317

(54) **VERFAHREN ZUR HERSTELLUNG VON KLEINKALIBRIGEN DAUERWÜRSTEN, UND DAUERWÜRSTE HERGESTELLT NACH DEM VERFAHREN**
PROCESS FOR MAKING SMALL PRESERVED SAUSAGES AND PRESERVED SAUSAGES SO MADE
PROCEDE POUR LA PRODUCTION DE SAUCISSONS SECS DE PETIT CALIBRE ET SAUCISSONS SECS OBTENUS SELON CE PROCEDE

(30) Priorität: 14.11.1990 CH 3603/90
(43) Veröffentlichungstag der Anmeldung: 28.10.1992
(73) Patentinhaber: FLEISCHTROCKNEREI CHURWALDEN AG, CH-7075 Churwalden (CH)
(72) Erfinder: NIEDERMANN, Fritz, verstorben (CH)
(74) Vertreter: Riederer, Conrad A., Dr.
(86) Internationale Anmeldenummer: CH9100231
(87) Internationale Veröffentlichungsnummer: WO9208374

(56) Entgegenhaltungen:
- DE-A- 1 802 612
- DE-U- 8 505 466
- FR-A- 2 584 577
- FSTA 79-02-s0283 79011181, Berezenko, A: "Method for heat treatment of sausages2, & USSR-A-599786
- WORLD PATENTS INDEX LATEST, Section Ch, Week 8545, Derwent Publications Ltd., London, GB; Class D, AN 85-281962 & SU-AA-1 153 866 (Kiev Meat Complex) 7 May 1985

## Beschreibung

Die Erfindung betrifft ein Verfahren zur Herstellung von kleinkalibrigen Dauerwürsten, bei welchem zur Herstellung des Bräts Fleisch unter Zusatz von Salz und Pökelstoff zerkleinert und dann mit körnigen Fleisch- und Speckteilen vermengt wird, das fertige Brät zu Wurst geformt und anschliessend direkt oder nach vorheriger Räucherung getrocknet wird.

Die Herstellung von Dauerwürsten basiert auf einer jahrhundertealten Tradition. Die bekannte Dauerwurst ist ein in der Regel in Naturdärmen oder Kunsthüllen abgefülltes Gemenge aus zerkleinertem rohen Fleisch und Speck mit einem Zusatz von Kochsalz, Pökelstoffen, Zucker, Gewürzen und einigen Pökelhilfsmitteln und Zusatzstoffen. Nach dem Abfüllen wird sie einem Reifungs- oder Fermentierungsprozess mit oder ohne Räucherung unterworfen. Diesem schliesst sich eine kürzere oder längere Phase der Nachreifung und Trocknung an. Während der Reifung rötet das Wurstgut und die Wurst bekommt die für Pökelwaren charakteristische pökelrote Farbe. Gleichzeitig kommt es zur Verbindung der ursprünglich lose vorliegenden Fleisch- und Speckteilen zu einem zusammenhängenden Gefüge, wodurch die Wurst die nötige Bindung- und Schnittfähigkeit erlangt. In der Phase der Nachreifung und Trocknung bildet sich das für die jeweilige Rohwurstart typische Aroma aus und die Wurst wird durch Austrocknung zunehmend fester.

Die bekannten Dauerwürste sind ohne Kühlung längere Zeit haltbar. Sie müssen jedoch vor Licht geschützt werden, weil sonst das in ihnen enthaltene Fett leicht ranzig wird. Nachteilig ist ferner, dass die bekannten Dauerwürste geschält werden müssen, wobei man beim Schälen leicht fettige Hände bekommt.

Im Gegensatz zur Herstellung von Brühwürsten, welche zum raschen Verzehr bestimmt sind und kühl gelagert werden müssen, ist die Herstellung von Dauerwürsten wesentlich heikler. Bereits relativ geringe Ursachen können zu fehlerhaften Produkten führen. Man unterscheidet dabei Fehler im Aussehen, Fehler in der Bindung und Konsistenz, Farbfehler, Geruchs- und Geschmacksfehler. Fehler im Aussehen sind beispielsweise Faltenbildung oder Loslösen der Hülle, Beschlagen, Verschimmeln, Salzausschlag, Fett ausschwitzen, unregelmässige Rauchfarbe, Hüllenschäden, Platzen der Wursthülle. Schwerwiegender als Fehler im Aussehen sind Fehler in der Bindung und Konsistenz, wie z.B. Trockenrand, Hohlraumbildung, Porosität, zu weiche Beschaffenheit und Fadenziehen.

Die Dauerwurst sollte immer ein pökelrotes Aussehen haben, weil der Verbraucher in Ermangelung anderer Beurteilungsmöglichkeiten aus dem Zustand der Farbe auf die Beschaffenheit der Dauerwurst zu schliessen pflegt. Farbfehler bei Dauerwürsten sind beispielsweise mangelhafte Umrötung, schlechte Farbhaltung, verwaschenes, unklares Schnittbild, marmoriertes Aussehen, dunkle Anschnittfarbe, Kern- oder Randverfärbungen und Rotverfärbung des Speckes. Besonders schwerwiegend sind aber die bei Dauerrohwürsten möglichen Geruchs- und Geschmacksfehler, wie übermässige Säuerung, bitterer Geschmack, Ranzigkeit, fischiger oder schimmliger Geruch. Besonders schlimm sind Fäulniserscheinungen, die bei der Dauerwurst nicht so auffällig wahrgenommen werden können wie beim Fleisch. Im Anfangsstadium der Fäulnis kann mitunter nur ein gewisser Stich eventuell nach Amoniak, Schwefelwasserstoff oder anderen übelriechenden gasförmigen Stoffen wahrgenommen werden (Coretti, Kornell, "Rohwurstreifung und Fehlerzeugnisse bei der Rohwurstherstellung", Fleischforschung und Praxisschriftenreihe Heft 5).

Es ist daher Aufgabe der vorliegenden Erfindung, ein Verfahren zur Herstellung von kleinkalibrigen Dauerwürsten zu schaffen, bei dem die Gefahr des Anfalls von Fehlerzeugnissen klein ist. Das durch das Verfahren erzeugte Produkt soll insbesondere auch modernen Konsumbedürfnissen Rechnung tragen. Diese Aufgabe wird dadurch gelöst, dass bei der Herstellung des Bräts das Fleisch fein zerkleinert wird, dass die Wurst zur Koagulation des Bräts kurzzeitig erhitzt wird, dass anschliessend an diese Erhitzung die Wurst getrocknet wird, und dass nach der Trocknung der Dauerwurst diese mit einer Schutzhülle versehen wird, oder dass die Dauerwurst in Stücke. vorbestimmter Länge zerschnitten wird und das jeweilige Stück mit einer Schutzhülle versehen wird. Mit diesem Verfahren wird eine Dauerwurst geschaffen, die modernen Konsumgewohnheiten entspricht. Sie kann längere Zeit ohne Kühlung aufbewahrt werden. Im Gegensatz zu üblichen Dauerwürsten, welche immer die Hülle aufweisen, in welche das Brät eingefüllt wurde, und welche sich nicht leicht entfernen lässt, kann bei der erfindungsgemässen Dauerwurst die nachträglich angebrachte Schutzhülle leicht entfernt werden, ohne dass man fettige Hände bekommt. Da die erfindungsgemässe Dauerwurst, im Gegensatz zum Beispiel zu Salami, kleinkalibrig ist, muss sie zum Verzehr nicht geschnitten werden. Sie eignet sich daher besonders gut als Snack.

Die Formung der Wurst kann auf verschiedene Weise erfolgen. Zweckmässigerweise wird zur Formung der Wurst das Brät in Darm, vorzugsweise Schäldarm abgefüllt. Im Gegensatz zur üblichen Herstellung von Dauerwurst dient aber der Darm lediglich als Verfahrenshilfe. Er wird nur benötigt, bis die Wurstmasse eine genügende Bindung durch Koagulation bei der Hitzeanwendung erreicht hat und wird dann durch die Schutzhülle ersetzt. Als Schutzhülle kann eine Klarsichtfolie verwendet werden, was den Vorteil hat, dass die darin verpackte geschälte Wurst klar sichtbar ist. Im Gegensatz zu bekannten Dauerwurstwaren sieht also der Käufer die Beschaffenheit des Wurstprodukts. Es erweist sich als wichtiger Vorteil gegenüber herkömmlichen Dauerwürsten, dass durch die zur Koagulation verwendeten Hitzebehandlung im Brät vorhandene Bakterien zerstört werden. Von grosser Bedeutung ist auch, dass durch die Hitzebehandlung die Lipasen zerstört werden. Lipasen sind Enzyme, welche für das Ranzigwerden von Fetten verantwortlich sind. Erst durch die Zerstörung der Lipasen wird es möglich, praktisch problemlos Klarsichtfolie als Verpackungsschutzhülle zu verwenden, ohne dass schon eine kurze Lichteinwirkung unerwünschte Geschmacksveränderungen verursacht. Im Gegensatz zu einer Verpackung aus Aluminium oder einem anderen, vor Licht schützendem Material, kann der Käufer den Inhalt der Verpackung klar sehen, was die Verkäuflichkeit der Dauerwurst stark erhöht.

Die üblichen Dauerwürste werden ohne sogenannte Schüttung, d.h. ohne Fremdwasserzugabe, hergestellt. Es erscheint denn auch widersinnig, einem Produkt Wasser zuzuführen, das nachher durch Trocknung wieder entfernt werden muss. Ein Ausführungsbeispiel der Erfindung ist aber dadurch gekennzeichnet, dass dem Brät bei dessen Herstellung eine Schüttung zugeführt wird. Durch die Kältewirkung der Schüttung wird eine besonders feine Zerkleinerung ermöglicht. Durch die Flüssigkeitszufuhr der Schüttung wird eine gute Lösung des Fleischeiweisses bewirkt, was zur Schaffung eines gut bindenden Bräts notwendig ist. Dies wiederum ermöglicht grosse Wurstlängen, die koaguliert auch ohne Darm an einem Rechen zum Trocknen aufgehängt werden können. Durch die Schüttung wird auch die Bildung eines Fett- und Geleeabsatzes bei der Hitzebehandlung vermieden. Verantwortlich dafür sind das Actin und Myosin, die in der Muskelzelle zum sogenannten Actomyosin-Komplex vereinigt sind. Das Wasserbindevermögen des Actomyosins ist sehr hoch. Es sinkt aber, wenn das fleischeigene Phosphat, sogenanntes Adenosintriphosphat, abgebaut wird. Das Wasserbindevermögen des Actomyosins kann durch sogenannte Kutterhilfsmittel, wie Phosphat oder Citrat, erhöht werden. Sehr bedeutend für das Wasserbindevermögen ist aber auch der hohe Zerkleinerungsgrad des Fleisches. Durch die Zerkleinerung werden viele Muskelzellen des Magerfleisches zerstört, d.h. aufgeschlossen, und aktivieren den Actomyosin-Komplex. Die stabile Wurstmasse ist mikroskopisch betrachtet einem Schwamm ähnlich: das gelöste Eiweiss bildet nach der Hitzebehandlung, also nach der Koagulation des Proteins, ein stabiles Gerüst, worin fein verteilt die unlöslichen Muskelzellpartikel und Fett- und Bindegewebebruchstücke eingeschlossen sind. Es wurde auch gefunden, dass die dem Brät zugeführte Schüttung keineswegs den späteren Trocknungsvorgang beeinträchtigt.

Aus den vorangegangenen Ausführungen ergibt sich auch, dass es zweckmässig ist, die Schüttung beim Zerkleinern des Fleisches zuzuführen, und dass als Fleisch zweckmässigerweise Magerfleisch verwendet wird.

Die Länge der durch das erfindungsgemässe Verfahren hergestellten Wurst wird lediglich durch deren Reissfestigkeit nach dem Schälen begrenzt. Wie bereits erwähnt, ist die Reissfestigkeit der nach dem beschriebenen Verfahren hergestellten Wurst gross. Eine Länge von fünfzig bis zweihundert Zentimeter, vorzugsweise einhundert Zentimeter, hat sich als zweckmässig erwiesen. Diese Wurstlängen können zum Trocknen an einem Rechen aufgehängt werden. Da die Wurstlänge dank der hohen Reissfestigkeit des Produkts gross gewählt werden kann, kann die Beschickung des Rechens in viel kürzerer Zeit erfolgen, als wenn kurze Würstchen aufgehängt werden müssten.

Für Dauerwürste ist gewöhnlich ein Rauchgeschmack erwünscht. Die Räucherung erfolgt zweckmässigerweise vor dem Erhitzen, also wenn sich das Brät noch im Darm befindet, der später abgeschält wird.

Es hat sich als zweckmässig erwiesen, dass die Wurst getrocknet, vorzugsweise luftgetrocknet, wird, bis ein Gewichtsverlust von etwa fünfzig Prozent erreicht ist. Dadurch wird ein sehr haltbares Produkt erzielt.

Ein Ausführungsbeispiel der Erfindung wird nun näher beschrieben:

Es wird ein Grundbrät hergestellt, indem zuerst zwei Teile Rindfleisch und drei Teile mageres Schweinefleisch unter Zusatz von Salz und Pökelstoff im Kutter, dem sogenannten Schneidmischer, fein zerkleinert werden. Ein Teil Eis oder Wasser wird bei der Zerkleinerung des Fleisches als sogenannte Schüttung zugeführt. Der Zusatz von Salz und Pökelstoff kann in Form von Nitritpökelsalz erfolgen. Der zerkleinerten Masse werden dann gescheffelte und vorgesalzene Fleisch- und Speckteile zugefügt und das Ganze wird dann gut vermengt. Es erfolgt dann das Abfüllen in einen Schäldarm, wobei Würste von etwa einem Meter Länge gebildet werden. Diese Würste werden während etwa dreissig bis fünfzig Minuten bei einer Temperatur von sechzig bis fünfundsiebzig Grad Celsius geräuchert und anschliessend auf etwa fünfundsiebzig Grad erhitzt und wieder auf Raumtemperatur abgekühlt. Die Würste werden dann geschält und an Rechen aufgehängt, bei einer Temperatur von etwa zwanzig Grad und fünfundfünfzig bis siebzig Prozent relativer Luftfeuchtigkeit getrocknet bis ein Gewichtsverlust von etwa fünfzig Prozent erreicht ist. Hierauf werden die Würste in Stücke von etwa zehn bis zwanzig Zentimeter, vorzugsweise sechzehn Zentimeter Länge geschnitten und in praktisch luftdichte Beutel aus Klarsichtfolie vakuumverpackt. Zweckmässigerweise sind eine Anzahl solcher Beutel, z.B. fünf, mit einer Perforation miteinander verbunden, so dass je nach Bedarf Beutel abgetrennt werden können. Es ist aber auch möglich, mehrere Stücke gemeinsam zu verpacken.

## Patentansprüche

1. Verfahren zur Herstellung von kleinkalibrigen Dauerwürsten, bei welchem zur Herstellung des Bräts Fleisch unter Zusatz von Salz und Pökelstoff zerkleinert und dann mit körnigen Fleisch- und Speckteilen vermengt wird, das fertige Brät zu Wurst geformt und anschliessend direkt oder nach vorheriger Räucherung getrocknet wird, dadurch gekennzeichnet, bei der Herstellung des Bräts das Fleisch fein zerkleinert wird, dass die Wurst zur Koagulation des Bräts kurzzeitig erhitzt wird, dass anschliessend an diese Erhitzung die Wurst getrocknet wird, und dass nach der Trocknung die so gebildete Dauerwurst mit einer Schutzhülle versehen wird, oder dass die Dauerwurst in Stücke vorbestimmter Länge zerschnitten und das jeweilige Stück mit einer Schutzhülle versehen wird.

2. Verfahren nach Anspruch 1, dadurch gekennzeichnet, dass dem Brät bei dessen Herstellung eine Schüttung zugeführt wird.

3. Verfahren nach Anspruch 2, dadurch gekennzeichnet, dass die Schüttung beim Zerkleinern des Fleisches zugeführt wird.

4. Verfahren nach einem der Ansprüche 1 bis 3, dadurch gekennzeichnet, dass als Fleisch Magerfleisch verwendet wird.

5. Verfahren nach einem der Ansprüche 1 bis 4, dadurch gekennzeichnet, dass zur Formung der Wurst das Brät in Darm, vorzugsweise Schäldarm, abgefüllt wird.

6. Verfahren nach einem der Ansprüche 1 bis 5, dadurch gekennzeichnet, dass die Wurst eine Länge von fünfzig bis zweihundert Zentimeter, vorzugsweise einhundert Zentimeter, aufweist.

7. Verfahren nach einem der Ansprüche 1 bis 6, dadurch gekennzeichnet, dass die Wurst geräuchert und dann erhitzt wird.

8. Verfahren nach einem der Ansprüche 5 bis 7, dadurch gekennzeichnet, dass vor dem Trocknen die Wurst geschält wird.

9. Verfahren nach einem der Ansprüche 1 bis 8, dadurch gekennzeichnet, dass zum Trocknen die Wurst am Dorn eines Rechens aufgehängt wird.

10. Verfahren nach einem der Ansprüche 1 bis 9, dadurch gekennzeichnet, dass die Wurst getrocknet, vorzugsweise luftgetrocknet, wird, bis ein Gewichtsverlust von etwa fünfzig Prozent erreicht ist.

11. Verfahren nach einem der Ansprüche 1 bis 10, dadurch gekennzeichnet, dass die Wurst oder das Wurststück mit Klarsichtfolie verpackt, vorzugsweise vakuumverpackt wird.

12. Verfahren nach Anspruch 11, dadurch gekennzeichnet, dass mehrere Würste oder Wurststücke gemeinsam verpackt werden.

13. Dauerwurst, hergestellt nach dem Verfahren, nach einem der Ansprüche 1 bis 12.

## Claims

1. A process for the production of small preserved sausages, in which to produce the mix meat is minced with the addition of salt and pickling substance and then mixed with granular meat and bacon pieces, the finished mix is formed into sausage and then dried directly or after smoking, characterised in that to produce the mix the meat is finely minced, the sausage is briefly heated to coagulate the mix, the sausage is dried after this heating operation, and that after drying the resulting preserved sausage is given a protective covering or in that the preserved sausage is cut into pieces of predetermined length and each piece is provided with a protective covering.

2. A process according to claim 1, characterised in that a filling is fed to the mix during its production.

3. A process according to claim 2, characterised in that the filling is fed during the mincing of the meat.

4. A process according to any one of claims 1 to 3, characterised in that the meat used is lean meat.

5. A process according to any one of claims 1 to 4, characterised in that to form the sausage the mix is filled into casings, preferably peelable casings.

6. A process according to any one of claims 1 to 5, characterised in that the sausage has a length of 50 to 200 centimetres, preferably 100 centimetres.

7. A process according to any one of claims 1 to 6, characterised in that the sausage is smoked and then heated.

8. A process according to any one of claims 5 to 7, characterised in that the sausage is peeled before drying.

9. A process according to any one of claims 1 to 8, characterised in that the sausage is suspended from the tines of a rake.

10. A process according to any one of claims 1 to 9, characterised in that the sausage is dried, preferably air-dried, until a weight loss of about 50% has been achieved.

11. A process according to any one of claims 1 to 10, characterised in that the sausage or sausage portion is packed, preferably vacuum-packed, in transparent film.

12. A process according to claim 11, characterised in that several sausages or sausage portions are packed jointly.

13. Preserved sausage produced by the process according to any one of claims 1 to 12.

## Revendications

1. Procédé de fabrication de saucissons secs de petit calibre, dans lequel, pour la préparation de la chair, on hache de la viande avec addition de sel et de saumure, puis on la mélange avec des morceaux granuleux de viande et de lard, on met la chair préparée sous forme de saucisson et on la sèche ensuite directement ou après l'avoir préalablement fumée, caractérisé en ce que, lors de la préparation de la chair, la viande est hachée finement, en ce que le saucisson est chauffé brièvement pour coaguler la chair, en ce que le saucisson est séché à la suite de ce chauffage, et en ce qu'après le séchage, le saucisson sec ainsi formé est muni d'une enveloppe de protection, ou en ce que le saucisson sec est coupé en morceaux de longueur prédéterminée et chaque morceau est muni d'une enveloppe de protection.

2. Procédé selon la revendication 1, caractérisé en ce qu'un liquide est répandu sur la chair au cours de sa préparation.

3. Procédé selon la revendication 2, caractérisé en ce que le liquide est répandu au cours du hachage de la viande.

4. Procédé selon l'une quelconque des revendications 1 à 3, caractérisé en ce que de la viande dégraissée est utilisée comme viande.

5. Procédé selon l'une quelconque des revendications 1 à 4, caractérisé en ce que, pour la mise en forme du saucisson, la chair est bourrée dans du boyau, de préférence du boyau pelé.

6. Procédé selon l'une quelconque des revendications 1 à 5, caractérisé en ce que le saucisson présente une longueur de 50 à 200 cm, de préférence de 100 cm.

7. Procédé selon l'une quelconque des revendications 1 à 6, caractérisé en ce que le saucisson est fumé, puis chauffé.

8. Procédé selon l'une quelconque des revendications 5 à 7, caractérisé en ce que le saucisson est pelé avant le séchage.

9. Procédé selon l'une quelconque des revendications 1 à 8, caractérisé en ce que le saucisson est suspendu à la dent d'un râtelier pour son séchage.

10. Procédé selon l'une quelconque des revendications 1 à 9, caractérisé en ce que le saucisson est séché, de préférence séché à l'air, jusqu'à ce qu'une perte de poids d'environ 50% soit ateinte.

11. Procédé selon l'une quelconque des revendications 1 à 10, caractérisé en ce que le saucisson ou le morceau de saucisson est empaqueté, de préférence sous vide, avec une feuille transparente

12. Procédé selon la revendication 11, caractérisé en ce que plusieurs saucissons ou morceaux de saucisson sont empaquetés ensemble.

13. Saucisson sec, fabriqué par le procédé selon l'une quelconque des revendications 1 à 12.
